# EUROPEAN PATENT APPLICATION

(11) **EP 4 442 477 A1**
(43) Date of publication of application: **09.10.2024**
(21) Application number: 22906513.1
(22) Date of filing: 12.12.2022
(51) Int. Cl.: B60H 1/00, B60L 58/26, B60L 58/27

(54) **ELECTRIC VEHICLE AND HEAT PUMP SYSTEM THEREOF**

(30) Priority: 16.12.2021 CN 202123171994 U
(71) Applicant: Beijing Chehejia Automobile Technology Co., Ltd., Beijing 101300 (CN)
(72) Inventor: DONG, Junqi, Beijing 101300 (CN)
(74) Representative: Regimbeau
(86) International application number: PCT/CN2022/138431
(87) International publication number: WO 2023/109768

(57) **Abstract**

A heat pump system of an electric vehicle, comprising a compressor (1), a battery cooling passage (4), and an outdoor heat exchange passage (5), wherein the battery cooling passage (4) and the outdoor heat exchange passage (5) are connected in parallel between an inlet pipeline (3) of the compressor and an outlet pipeline (2) of the compressor; a first valve body (33) is arranged on the outlet pipeline (2) of the compressor; a battery heat supply passage is provided between the outlet pipeline (2) of the compressor located upstream of the first valve body (33) and the downstream end of the battery cooling passage (4) in a communicating manner; and a second valve body (34) is arranged on the battery heat supply passage. The heat pump system not only can cool a battery, but also can heat the battery, so that temperature of the battery can be controlled precisely, and thus the battery is kept within a desirable working temperature range.

## Description

### CROSS-REFERENCE TO RELATED APPLICATION

This application claims priority to Chinese Patent Application No. 202123171994.8, filed on December 16, 2021, the content of which is incorporated herein by reference in its entirety.

### TECHNICAL FIELD

The present application relates to the technical field of vehicles, and in particular to an electric vehicle and a heat pump system thereof.

### BACKGROUND

A battery is the most important component in an electric vehicle, and provides power energy for the vehicle to run. Therefore, an efficient and precise thermal management of the battery is very important.

An existing battery has a relatively narrow operating temperature range due to a high energy density of the existing battery, thus a precise temperature control of the battery is required. For example, an optimal operating temperature range of a ternary lithium battery ranges from 20 °C to 30 °C. If a temperature of the battery is too low, a power release and charging speed of the battery will be affected. If the temperature of the battery is too high, the life of the battery will be affected.

### SUMMARY

Embodiments of the present application provide a heat pump system of an electric vehicle.

In one aspect, embodiments of the present application provide a heat pump system of an electric vehicle, including a compressor, a battery cooling passage and an outdoor heat exchange passage. The battery cooling passage and the outdoor heat exchange passage are connected in parallel between an inlet pipeline of the compressor and an outlet pipeline of the compressor. A first valve is provided on the outlet pipeline of the compressor. A battery heating passage is connected between a part of the outlet pipeline of the compressor located upstream of the first valve and a downstream end of the battery cooling passage. A second valve is provided on the battery heating passage.

In some embodiments, a battery heat exchanger is provided on the battery cooling passage. A first intermediate heat exchanger is connected between an inlet pipeline of the battery heat exchanger and an outlet pipeline of the battery heat exchanger. A first throttle valve is provided on the inlet pipeline of the battery heat exchanger and between the first intermediate heat exchanger and the battery heat exchanger. A pressure regulating valve is provided on the outlet pipeline of the battery heat exchanger and at a downstream end of the first intermediate heat exchanger.

In some embodiments, an indoor heat sink is provided on the outlet pipeline of the compressor.

In some embodiments, the heat pump system includes an indoor cooling passage connected in parallel with the battery cooling passage.

In some embodiments, a second intermediate heat exchanger is connected between the inlet pipeline of the compressor and the outdoor heat exchange passage.

In some embodiments, a second throttle valve is provided on the outdoor heat exchange passage, and a third valve is connected in parallel with the second throttle valve.

In some embodiments, the heat pump system includes an electric drive system cooling passage and a heat exchange device, and the heat exchange device is connected between the outdoor heat exchange passage and the electric drive system cooling passage to perform heat exchange.

In some embodiments, an upstream end of the outdoor heat exchange passage is connected with an upstream end of the battery cooling passage through a first connection passage, a fourth valve is provided on the first connection passage. A downstream end of the outdoor heat exchange passage is connected with the upstream end of the battery cooling passage through a second connection passage, a fifth valve is provided on the second connection passage. The downstream end of the outdoor heat exchange passage is connected with a downstream end of the battery cooling passage through a third connection passage, a sixth valve is provided on the third connection passage.

In some embodiments, the fifth valve is a one-way valve which permits flow only in a direction pointing toward the downstream end of the battery cooling passage.

In another aspect, embodiments of the present application disclose an electric vehicle including the heat pump system of the electric vehicle as described above.

When the first valve is opened and the second valve is closed, the battery cooling passage is unblocked in a forward direction, and the battery is cooled by the battery cooling passage. When the first valve is closed and the second valve is opened, the battery cooling passage is unblocked in a backward direction, the battery cooling passage does not play a cooling role, and the high-temperature and high-pressure refrigerant pumped from the compressor transfers heat to the battery cooling passage, thereby achieving a heating effect on the battery. Therefore, the heat pump system of the embodiment not only can cool the battery, but also can heat the battery, so that a temperature of the battery can be precisely controlled, and thus the battery can be maintained in a better operating temperature range.

### BRIEF DESCRIPTION OF THE DRAWINGS

The drawings herein are incorporated in the specification and form a part of the specification. The drawings illustrate embodiments in accordance with the present application, and are used together with the specification to explain the principles of the present application.

In order to explain more clearly technical solutions of the embodiments of the present application or the related art, the drawings for the description of the embodiments and the related art will be introduced briefly below. Apparently, other drawings may be acquired based on these drawings by those skilled in the art without creative efforts.
FIG. 1 is a schematic view of a standard heating mode of a heat pump system of an electric vehicle according to an embodiment of the present application.
FIG. 2 is a schematic view of a heating and dehumidifying mode of a heat pump system of an electric vehicle according to an embodiment of the present application.
FIG. 3 is a schematic view of a battery fast charge cooling mode of a heat pump system of an electric vehicle according to an embodiment of the present application.
FIG. 4 is a schematic view of a battery heating mode of a heat pump system of an electric vehicle according to an embodiment of the present application.

In the drawings, a solid line indicates that a pipeline is unblocked, and a dashed line indicates that a pipeline is blocked.

### List of Reference Symbols

1 - compressor; 2 - outlet pipeline of the compressor; 3 - inlet pipeline of the compressor; 4 - battery cooling passage; 5 - outdoor heat exchange passage; 6 - heat exchange device; 7 - indoor cooling passage; 8 - throttling member; 9 - indoor evaporator; 10 - battery heat exchanger; 11 - indoor heat sink; 12 - first connection passage; 13 - fourth valve; 14 - second connection passage; 15 - third connection passage; 16 - first heat sink; 17 - second heat sink; 18 - bypass passage; 19 - fifth valve; 20 - sixth valve; 21 - third valve; 22 - second throttle valve; 23 - electric drive system; 24 - electric heating device; 25 - first intermediate heat exchanger; 26 - pressure regulating valve; 27 - pump; 28 - gas-liquid separator; 29 - valve assembly; 30 - first throttle valve; 31 - electric drive system cooling passage; 32 - second intermediate heat exchanger; 33 - first valve; 34 - second valve.

### DETAILED DESCRIPTION

For the purpose of clear understanding of the aforementioned aims, features and advantages of the present application, technical solutions of the present application will be further described below. It should be noted that embodiments in the present application and technical features in the embodiments can be combined with each other without conflict.

Although many specific details are set forth in the following description to facilitate a full understanding of the present application, the present application may be implemented in other ways different from those described herein. Apparently, the embodiments described in the specification are only a part of the embodiments of the present application and not all of the embodiments of the present application.

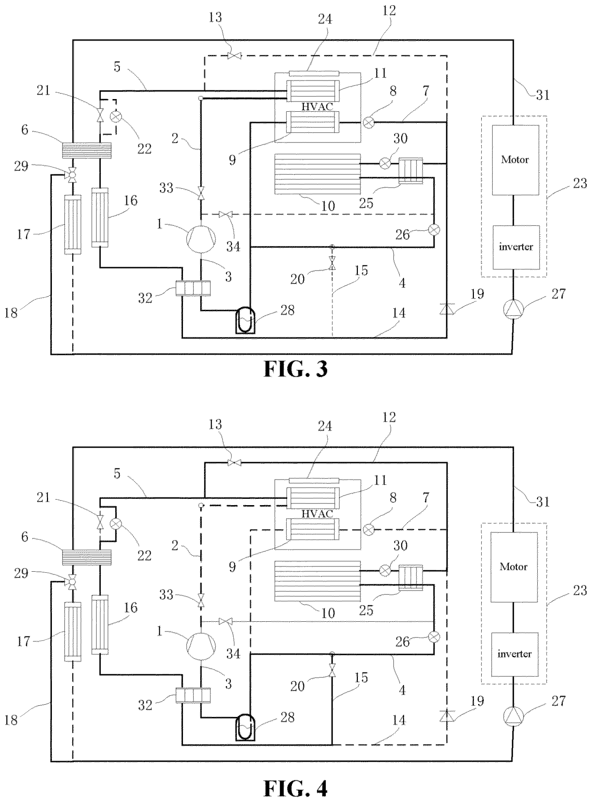

As shown in FIG. 4, a heat pump system of an electric vehicle according to an embodiment of the present application includes a compressor 1, a battery cooling passage 4 for cooling a battery, and an outdoor heat exchange passage 5 which is placed outside a cab of the electric vehicle and configured to allow a heat dissipation of a refrigerant. A first valve 33 is provided on an outlet pipeline 2 of the compressor. A battery heating passage is connected between a portion of the outlet pipeline 2 of the compressor located upstream of the first valve 33 and a downstream end of the battery cooling passage 4. A second valve 34 is provided on the battery heating passage.

When the first valve 33 is opened and the second valve 34 is closed, the battery cooling passage 4 is unblocked in a forward direction, and the battery is cooled by the battery cooling passage 4. When the first valve 33 is closed and the second valve 34 is opened, the battery cooling passage 4 is unblocked in a backward direction, the battery cooling passage 4 does not play a cooling role, and the high-temperature and high-pressure refrigerant pumped from the compressor 1 transfers heat to the battery cooling passage 4, thereby achieving a heating effect on the battery. Therefore, the heat pump system of the embodiment not only can cool the battery, but also can heat the battery, so that a temperature of the battery can be precisely controlled, and thus the battery can be maintained in a better operating temperature range.

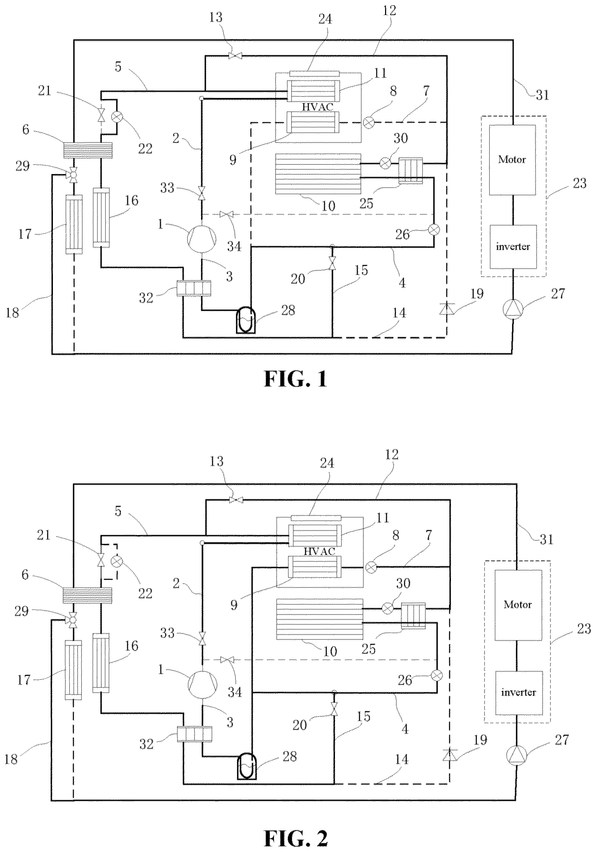

As shown in FIG. 1, in some embodiments, a heat exchange device 6 and an electric drive system cooling passage 31 are provided, and the electric drive system cooling passage 31 is configured to cool an electric motor, an electric control device etc. The battery cooling passage 4 and the outdoor heat exchange passage 5 are connected in series or in parallel between an inlet pipeline 3 of the compressor and the outlet pipeline 2 of the compressor. A first heat sink 16 is provided on the outdoor heat exchange passage 5, a second heat sink 17 is provided on the electric drive system cooling passage 31, and the heat exchange device 6 is connected between the outdoor heat exchange passage 5 and the electric drive system cooling passage 31 to perform heat exchange.

In the embodiment of the present application, the first heat sink 16 is provided on the outdoor heat exchange passage 5, the second heat sink 17 is provided on the electric drive system cooling passage 31, and the heat exchange device 6 is connected between the outdoor heat exchange passage 5 and the electric drive system cooling passage 31 to perform heat exchange. In this way, when the refrigerant in the outdoor heat exchange passage 5 is dissipated by the first heat sink 16, a part of the heat of the outdoor heat exchange passage 5 is transferred to the electric drive system cooling passage 31 through the heat exchange device 6, and this part of the heat is dissipated by the second heat sink 17. In this case, the temperature of the refrigerant is considerably reduced by the action of both the first heat sink 16 and the second heat sink 17, and the cooling capacity of the system is improved. Especially when the battery is charged or fast charged, the second heat sink 17 can exert a greater heat dissipation effect, since the electric drive system 23 does not operate to generate heat.

In some embodiments, the electric drive system cooling passage 31 is a water circulation passage. A pump 27 is preferably provided on the electric drive system cooling passage to accelerate the circulation of cooling water, and improve the heat dissipation efficiency.

In some embodiments, the heat exchange device 6 is a water-cooled heat exchanger which has a simple structure, a stable operation and a low cost.

In some embodiments, a battery heat exchanger 10 is provided on the battery cooling passage 4, and a first intermediate heat exchanger 25 is connected between an inlet pipeline of the battery heat exchanger 10 and an outlet pipeline of the battery heat exchanger 10. The temperature difference between the inlet pipeline and the outlet pipeline of the battery heat exchanger 10 is reduced by the first intermediate heat exchanger 25, so that the refrigerant is pre-cooled before entering into the battery heat exchanger 10. A first throttle valve 30 is provided on the inlet pipeline of the battery heat exchanger 10 and between the first intermediate heat exchanger 25 and the battery heat exchanger 10. A pressure regulating valve 26 is provided on the outlet pipeline of the battery heat exchanger 10 and at a downstream end of the first intermediate heat exchanger 25. By the adjustment of an outlet pressure of the first intermediate heat exchanger 25 by the pressure regulating valve 26 and throttling action of the first throttle valve 30 upstream of the battery heat exchanger 10, the degree of superheat of the steam inside the first intermediate heat exchanger 25 can be controlled, and the cooling efficiency for the battery can be effectively controlled.

In some embodiments, an indoor heat sink 11 is provided on the outlet pipeline 2 of the compressor. The indoor heat sink 11 is configured to transfer a part of the heat of the refrigerant into the vehicle to perform a heating function. Moreover, it can also reduce the temperature of the refrigerant while performing the heating function, which is conducive to improving the cooling efficiency for the battery. In order to improve the heating speed and the heating efficiency, an electric heating device 24 may be provided on a side of the indoor heat sink 11 for auxiliary heating.

In a further embodiment, a second throttle valve 22 is provided on the outdoor heat exchange passage. A third valve 21 is connected in parallel with the second throttle valve 22. In a heating mode, the third valve 21 may be closed, and the refrigerant flows through the second throttle valve 22. In this case, the first heat sink 16 acts as an evaporator and absorbs external heat, thereby improving the heating efficiency of the system.

In some embodiments, the heat pump system further includes an indoor cooling passage 7 on which a throttling member 8 and an indoor evaporator 9 are provided. The indoor cooling passage 7 is connected in parallel with the battery cooling passage 4, and is configured to cool the indoor space.

In further embodiments, the heat pump system further includes a valve assembly 29, and a bypass passage 18 connected between an inlet pipeline of the second heat sink 17 and an outlet pipeline of the second heat sink 17. The valve assembly 29 is configured to selectively unblock the access to the outdoor heat sink or the bypass passage 18. When the bypass passage 18 is unblocked, the refrigerant in the outdoor heat exchange passage 5 does not flow through the second heat sink 17 but flows through the bypass passage 18. Since the temperature of the refrigerant in the outdoor heat exchange passage 5 decreases after the refrigerant passes through the first throttle valve 30, when the refrigerant subsequently passes through the heat exchange device 6, the temperature of the electric drive system cooling passage 31 can be reduced through the heat exchange device 6 to cool the electric drive system 23. By blocking the access to the second heat sink 17 at this time, unnecessary cooling loss can be avoided, and a better cooling effect for the electric drive system 23 can be achieved.

In some embodiments, a second intermediate heat exchanger 32 is connected between the inlet pipeline 3 of the compressor and the outdoor heat exchange passage 5. In a case that the outdoor heat exchange passage 5 is connected in series with the battery cooling passage 4, the second intermediate heat exchanger 32 is configured to pre-cool the refrigerant entering into the battery cooling passage 4, so as to improve the cooling efficiency. Certainly, in a case that the outdoor heat exchange passage 5 is connected in parallel with the battery cooling passage 4, the second intermediate heat exchanger 32 can also reduce the temperature difference between the refrigerant in the outdoor heat exchange passage 5 and the refrigerant in the battery cooling passage 4 before they meet.

In some embodiments, an upstream end of the outdoor heat exchange passage 5 is connected with an upstream end of the battery cooling passage 4 through a first connection passage 12 on which a fourth valve 13 is provided. A downstream end of the outdoor heat exchange passage 5 is connected with the upstream end of the battery cooling passage 4 through a second connection passage 14 on which a fifth valve 19 is provided. The downstream end of the outdoor heat exchange passage 5 is connected with a downstream end of the battery cooling passage 4 through a third connection passage 15 on which a sixth valve 20 is provided. When the fourth valve 13 and the fifth valve 19 are opened and the sixth valve 20 is closed, the battery cooling passage 4 is connected in parallel with the outdoor heat exchange passage 5. When the fourth valve 13 and the fifth valve 19 are closed and the sixth valve 20 is opened, the battery cooling passage 4 is connected in series with the outdoor heat exchange passage 5. In this way, the connection of the battery cooling passage 4 and the outdoor heat exchange passage 5 can be switched between the series connection configuration and the parallel connection configuration.

The fifth valve 19 is preferably a one-way valve, which permits flow only in a direction pointing toward the downstream end of the battery cooling passage 4. The one-way valve does not need to be controlled and is simple in structure.

In some embodiments, a gas-liquid separator 28 is provided on the inlet pipeline 3 of the compressor. The gas-liquid separator is configured to separate the liquid from the refrigerant flowing back to the compressor 1, to avoid liquid hammering or dry friction occurred at the compressor 1.

In another aspect, embodiments of the present application disclose an electric vehicle including the heat pump system of the electric vehicle as described above.

The heat pump system of the electric vehicle can be operated in at least a standard heating mode, a heating and dehumidifying mode, a battery fast charge cooling mode and a battery heating mode.

### Standard heating mode

As shown in FIG. 1, in this mode, the third valve 21, the fifth valve 19 and the throttling member 8 are closed, the valve assembly 29 is selected to unblock the bypass passage 18, and the other passages are unblocked. The high-temperature and high-pressure refrigerant pumped by the compressor 1 enters into the indoor heat sink 11 through the outlet pipeline 2 of the compressor, and a fan corresponding to the indoor heat sink 11 is activated to blow hot air into the indoor space of the electric vehicle. After the refrigerant flows through the indoor heat sink 11, a part of the refrigerant flows toward the battery cooling passage 4 through the first connection passage 12, and the other part of the refrigerant flows toward the outdoor heat exchange passage 5. On the one hand, the refrigerant flowing toward the battery cooling passage 4 first flows toward the first intermediate heat exchanger 25, then is transitioned to a low-temperature and low-pressure state via the throttling action of the first throttle valve 30, and then cooling is occurred in the battery heat exchanger 10. The refrigerant flowing out of the battery heat exchanger 10 passes through the first intermediate heat exchanger 25 again, and is controlled by the regulation of the downstream pressure regulating valve 26 to avoid the generation of superheated steam, and the pressure regulating valve 26 cooperates with the first throttle valve 30 to realize the control of the cooling efficiency for the battery. On the other hand, the refrigerant flowing toward the outdoor heat exchange passage 5 is transitioned to a low-temperature and low-pressure state via the throttling action of the first throttle valve 30, so that a part of the cooling capacity is transferred to the electric drive system cooling passage 31 through the downstream heat exchange device 6, to cool the electric drive system 23. The use of the bypass passage 18 to disconnect the second heat sink 17 is to avoid the loss of cooling capacity. The refrigerant itself is heated as it flows through the heat exchange device 6, thereby increasing the system temperature of the refrigerant, improving the heating efficiency and realizing the waste heat utilization of the electric drive system 23. After the refrigerant flows through the heat exchange device 6, the refrigerant enters into the first heat sink 16. The first heat sink 16 acts in this case as an evaporator, absorbs heat in the environment, and increases the system temperature of the refrigerant. After the refrigerant flowing through the first heat sink 16 passes through the fifth valve 19, the refrigerant merges with the refrigerant in the battery cooling passage 4 via the third connection passage 15, and the merged refrigerant then flows toward the inlet pipeline 3 of the compressor.

### Heating and dehumidifying mode

As shown in FIG. 2, the difference between the heating and dehumidifying mode and the standard heating mode lies in that the throttling member 8 is opened. During the heating operation of the system, in order to reduce the humidity of the air, the throttling member 8 can be opened, so that the indoor evaporator 9 forms a cold body and is placed in an air outlet direction of the indoor heat sink 11. Moisture in a part of the air flowing through a surface of the indoor evaporator 9 is cooled and liquefied, so that the humidity of the air can be reduced after a period of circulation.

### Battery fast charge cooling mode

Since more heat will be generated in fast charging of the battery, the more effective cooling is required. As shown in FIG. 3, in order to increase the cooling capacity of the battery heat exchanger 10 compared to the standard heating mode, the outdoor heat exchange passage 5 and the battery cooling passage 4 are connected in series. That is, the fourth valve 13 and the sixth valve 20 are closed, the third valve 21 is opened and the first throttle valve 30 is closed, and the valve assembly 29 is selected to unblock the access to the second heat sink 17. The indoor heat sink 11 and the indoor evaporator 9 can be selected whether to operate depending on the situation. Compared with the standard heating mode, all of the refrigerant is directed toward the outdoor heat exchange passage, and the first heat sink 16 and the second heat sink 17 are operated simultaneously through the heat exchange device 6 to allow the heat dissipation of the refrigerant. The refrigerant then flows toward the battery cooling passage 4 through the second connection passage 14. Since the initial temperature of the refrigerant entering into the battery cooling passage 4 is lower, a more efficient cooling effect can be achieved.

### Battery heating mode

As shown in FIG. 4, the first valve 33 is closed, the second valve 34 is opened, and the refrigerant pumped from the compressor 1 is fed in the backward direction into the battery cooling passage 4 through the battery heating passage, to heat the battery.

As can be seen from the above, in the heat pump system of the electric vehicle in the embodiments, the entire heat pump system can be operated in various modes to realize the optimum combinations, the best energy efficiency and the comprehensive waste heat utilization of the system.

The embodiments of the present application also provide an electric vehicle, including the heat pump system of the electric vehicle as described above. Since the heat pump system of the embodiments of the present application has high efficiency in battery cooling, battery heating and indoor heating, the electric vehicle is more energy-saving and provides better comfort.

It should be noted that in the context of the present application, the relational terms such as "first" and "second" serve only to differentiate one element or operation from another element or operation, and do not require or imply any order between these elements or operations. In addition, the terms "include", "comprise" and any other variant thereof are open-ended, that is, a process, method, article or device that includes a set of elements includes not only those elements but also other elements that are not explicitly listed, or that are inherent in such a process, method, article or device. In the absence of further limitations, an element defined by the phrase "includes a ..." does not preclude the existence of another identical element in the process, method, article or device in which it is included.

The above are only specific embodiments of the present application to enable those skilled in the art to understand or implement the present application. It will be apparent to those skilled in the art that various modifications and variations can be made to the embodiments of the present application, and the general principle of the present application can be implemented by the other embodiments without departing from the spirit and scope of the present application. Accordingly, the present application will not be limited to the embodiments described herein, but will conform to the widest range consistent with the principles and novel features of the present application.

## Claims

1. A heat pump system of an electric vehicle, comprising a compressor (1), a battery cooling passage (4) and an outdoor heat exchange passage (5), the battery cooling passage (4) and the outdoor heat exchange passage (5) being connected in parallel between an inlet pipeline (3) of the compressor and an outlet pipeline (2) of the compressor, a first valve (33) being provided on the outlet pipeline (2) of the compressor, a battery heating passage being connected between a part of the outlet pipeline (2) of the compressor located upstream of the first valve (33) and a downstream end of the battery cooling passage (4), a second valve (34) being provided on the battery heating passage.

2. The heat pump system of the electric vehicle according to claim 1, wherein a battery heat exchanger (10) is provided on the battery cooling passage (4), a first intermediate heat exchanger (25) is connected between an inlet pipeline of the battery heat exchanger (10) and an outlet pipeline of the battery heat exchanger (10), a first throttle valve (30) is provided on the inlet pipeline of the battery heat exchanger (10) and between the first intermediate heat exchanger (25) and the battery heat exchanger (10), a pressure regulating valve (26) is provided on the outlet pipeline of the battery heat exchanger (10) and at a downstream end of the first intermediate heat exchanger (25).

3. The heat pump system of the electric vehicle according to claim 1 or 2, wherein an indoor heat sink (11) is provided on the outlet pipeline (2) of the compressor.

4. The heat pump system of the electric vehicle according to any one of claims 1 to 3, wherein the heat pump system comprises an indoor cooling passage (7) connected in parallel with the battery cooling passage (4).

5. The heat pump system of the electric vehicle according to any one of claims 1 to 4, wherein a second intermediate heat exchanger (32) is connected between the inlet pipeline (3) of the compressor and the outdoor heat exchange passage (5).

6. The heat pump system of the electric vehicle according to any one of claims 1 to 5, wherein a second throttle valve (22) is provided on the outdoor heat exchange passage (5), and a third valve (21) is connected in parallel with the second throttle valve (22).

7. The heat pump system of the electric vehicle according to any one of claims 1 to 6, wherein the heat pump system comprises an electric drive system cooling passage (31) and a heat exchange device (6), and the heat exchange device (6) is connected between the outdoor heat exchange passage (5) and the electric drive system cooling passage (31) to perform heat exchange.

8. The heat pump system of the electric vehicle according to any one of claims 1 to 7, wherein an upstream end of the outdoor heat exchange passage (5) is connected with an upstream end of the battery cooling passage through a first connection passage (12), a fourth valve (13) is provided on the first connection passage (12), a downstream end of the outdoor heat exchange passage (5) is connected with the upstream end of the battery cooling passage through a second connection passage (14), a fifth valve (19) is provided on the second connection passage (14), the downstream end of the outdoor heat exchange passage (5) is connected with a downstream end of the battery cooling passage through a third connection passage (15), a sixth valve (20) is provided on the third connection passage (15).

9. The heat pump system of the electric vehicle according to claim 8, wherein the fifth valve (19) is a one-way valve which permits flow only in a direction pointing toward the downstream end of the battery cooling passage (4).

10. An electric vehicle comprising the heat pump system of the electric vehicle according to any one of claims 1 to 9.
